# EUROPEAN PATENT SPECIFICATION

(11) **EP 4 433 799 B1**
(45) Date of publication and mention of the grant of the patent: **27.08.2025**
(21) Application number: 22823621.2
(22) Date of filing: 18.11.2022
(51) Int. Cl.: G01N 1/36

(54) **DEVICE FOR PROCESSING BIOLOGICAL SAMPLE**
VORRICHTUNG ZUR VERARBEITUNG BIOLOGISCHER PROBEN
DISPOSITIF DE TRAITEMENT D'ÉCHANTILLON BIOLOGIQUE

(30) Priority: 19.11.2021 IT 202100029363
(43) Date of publication of application: 25.09.2024
(73) Proprietor: Expertmed S.r.L., 37137 Verona (IT)
(72) Inventor: SGARBI, Massimo, 37137 Verona (VR) (IT); ROSATI, Giulio, 35122 Padova (PD) (IT); GHIOTTI, Andrea, 35122 Padova (PD) (IT)
(74) Representative: Zoli, Filippo
(86) International application number: PCT/IB2022/061134
(87) International publication number: WO 2023/089550

(56) References cited:
- US-A- 5 269 671
- US-A1- 2005 112 034
- US-B2- 9 389 154

## Description

### Technical Field

The present invention relates to a device for processing biological samples.

### Background Art

For a tissue to be analyzable through an optical microscope, it must be cut into very thin sections so that light can pass through it.

To obtain such sections, devices called microtomes are used, with which sections less than 10µm thick can be made.

In order to be able to dissect the tissues, these must undergo a treatment that involves fixing the material in a bath of buffered formalin and other fixative liquids and then embedding it in paraffin so as to increase the texture of the sample and consequently to facilitate obtaining thin, homogeneous sections.

The process of fixation of the sample to be analyzed is carried out by means of the use of special boxes comprising a body that defines a containment chamber for the biological sample that is open at the top and provided with a removable closing lid. Both the body and the lid have a plurality of through openings adapted to allow for the passage of formalin and fixative fluids through the containment chamber of the biological sample.

Once the tissue has undergone the fixation process, it is placed outside the box and inside a supporting element adapted to contain it.

To this end, it is common practice to divide the paraffin dispensing into two phases, that is, to provide a first paraffin pouring to partially cover the sample and necessary for the anatomical piece to be correctly oriented and thus to obtain the maximum result during microtome cutting, and a second paraffin pouring, carried out after the first dose has cooled, to complete the filling of the box. Generally, after the first paraffin pouring, the box is placed in the refrigerator to allow the paraffin to cool and fix the tissue.

To speed up the paraffin solidification process, even after the second pouring, the supporting element and the relevant box can be arranged inside a freezer, from which they are then taken out at the end of a predefined period of time.

Once the paraffin has solidified, the box with the paraffin-wrapped tissue attached is placed on the microtome, which performs the cutting of the tissue according to the desired thickness.

Since paraffin tends to wrap not only the tissue arranged outside the box but also the box itself, it is necessary to remove the excess paraffin arranged around its perimeter edges before placing the box on the microtome. Excess paraffin that goes around the box may in fact cause it to be difficult or incorrectly placed on the microtome and, consequently, to cut the biological sample incorrectly.

This removal is done manually by the operators using blades, making this operation particularly risky.

In addition, there may be a need to make new cuts of the biological sample (which is stored over time) even years later.

The conformation of the boxes known to date does not allow for repeatable positioning of the boxes on the microtome over time. Since the microtome performs the cutting of the biological sample according to a predefined inclination, in case the orientation of the box on the microtome changes over time, the biological sample will be cut at a different inclination than before. This may result in the inability to obtain sections of the biological sample that can be used for subsequent analysis, particularly in the case of small biological samples, since the first cuts made by the microtome at a different inclination than the first sampling will substantially have the effect of "trimming" the sample itself, resulting in the loss of biological tissue.

To date, the operation of placing the box on the microtome is carried out manually by an operator, thus being cumbersome both in terms of the time required to perform it and economically as it requires the constant presence of an operator.

Not least, the introduction of the paraffin inside the supporting element that houses the box generates a force on the latter that pushes it out of the supporting element itself, thus causing a kind of "floating effect", which requires the constant presence of an operator to keep the box in the correct position.

Some devices for processing biological samples are known from US 5269 671 A, US 2005/112034 A1 and US 9 389 154 B2.

### Description of the Invention

The main aim of the present invention is to devise a device for processing biological tissues that makes it possible to significantly reduce, compared with the state of the art, the risk of paraffin going undesirably around the device itself, so as to speed up and economize the subsequent processing phases.

Within this aim, one object of the present invention is to devise a device for processing biological tissues that will make it easier and safer for operators to handle the boxes, without the need to use sharp tools to remove excess paraffin, and to make the box already available for the placement thereof on the microtome, so as to ensure the proper execution of the cutting phases of the biological sample.

Another object of the present invention is to facilitate the gripping and movement of the boxes themselves.

Yet another object is to devise a device for processing biological tissues that can be placed on the microtome in a repeatable manner over time.

Another object of the present invention is to devise a device for processing biological samples that can overcome the aforementioned drawbacks of the prior art within the framework of a simple, rational solution that is also easy and effective to use, safe for operators as well as inexpensive.

The aforementioned objects are achieved by this device for processing biological samples according to claim 1.

### Brief Description of the Drawings

Other characteristics and advantages of the present invention will become more apparent from the description of a preferred, but not exclusive, embodiment of a device for processing biological samples, illustrated by way of an indicative, yet non-limiting example, in the accompanying tables of drawings in which:
Figure 1 is an axonometric view of a device according to the invention in an early embodiment;
Figure 2 is an exploded view of the device in Figure 1;
Figure 3 is an enlargement of a detail of the device in Figure 1;
Figure 4 is a cross-sectional view of the device in Figure 1 with a biological sample inserted;
Figure 5 is an exploded view of a device according to a second embodiment which is not part of the present invention;
Figure 6 is a cross-sectional view of the device in Figure 5 with the body inserted into the relevant supporting element;
Figure 7 is an axonometric view of a supporting element according to the invention in a further alternative embodiment.

### Embodiments of the Invention

With particular reference to these figures, reference numeral 1 globally indicates a device for processing biological samples C, specifically for processing portions of tissue which have to undergo histological examination.

The device 1 comprises a body 2 defining at least one open containment chamber 3 and having a bottom wall 4 provided with a plurality of openings 5 passing through it and a plurality of containment walls 6 extending from the bottom wall 4 so as to define a closed profile.

The body 2 has a polygonal conformation and comprises at least one inclined front face 26a and a pair of outer lateral faces 26b contiguous and transverse to the front face 26a, where the outer lateral faces 26b are opposite each other.

More particularly, in the embodiment shown in the figures, the body 2 is bounded by four outer faces and comprises, in addition to the front face 26a and to the outer lateral faces 26b also a rear face 26c, where the latter is contiguous and transverse to the outer lateral faces 26b and is opposite the front face 26a. Appropriately, the outer lateral faces 26b have relevant lying planes substantially orthogonal to those of the front face 26a and of the rear face 26c.

Preferably, the body 2 has an elongated conformation and the outer lateral faces 26b extend parallel to the direction of longitudinal development of the body itself while the rear face 26c develops transversely to the direction of longitudinal development.

The device 1 then comprises at least one supporting element 7 defining at least one housing seat 8 of the body 2, wherein such a housing seat 8 has at least one recess 9 intended to receive the biological sample C. The recess 9 is arranged, in use (i.e., with the body 2 inserted in the housing seat 8), facing the bottom wall 4.

According to the invention, the body 2 comprises at least one cavity 10 defined at least on the outer lateral faces 26b thereof, wherein such a cavity 10 defines at least one relevant abutment surface 11 and the supporting element 7 has at least one pair of shaped portions 12 adapted to be inserted in the cavities 10 as a result of the introduction of the body 2 into the housing seat 8. In addition, the supporting element 7 also comprises at least one pair of retaining elements 13 each of which is adapted to interact with a relevant abutment surface 11 as a result of the insertion of the shaped portions 12 into the relevant cavities 10, so as to counteract the body 2 coming out of the housing seat 8.

Advantageously, the cavity 10 develops substantially along the entire extension of the relevant outer lateral face 26b and the shaped portions 12 are adapted to be inserted in the relevant cavities 10 substantially along the entire development thereof, so as to define a sealed coupling between the body 2 and the supporting element 7 that prevents paraffin leakage to the outside and allows the body itself to be held in place.

More particularly, the cavities 10 defined on the outer lateral faces 26b run parallel to the direction of longitudinal development of the body 2. In other words, the cavities 10 develop substantially (i.e., unless the junctions defined at the joining areas with the adjacent walls) along the entire length of the outer lateral faces 26b.

Advantageously, the body 2 comprises at least one cavity 10 also defined on its rear face 26c and the supporting element 7 comprises a plurality of retaining elements 13, each of which is adapted to be inserted, with the relevant shaped portion 12, inside the cavity 10 defined on the corresponding face 26b, 26c. The cavity 10 defined on the rear face 26c is thus arranged transversely to the direction of longitudinal development of the body 2.

The cavities 10 run parallel to the bottom wall 4. The interplay between the retaining elements 13 and the relevant abutment surfaces 11 together with the insertion of the shaped portions 12 into the relevant cavities 10 ensures the body 2 to adhere to the housing seat 8, thus minimizing the risk of the body itself moving during the subsequent pouring of the paraffin P and minimizing the clearance between the body 2 and the supporting element 7, thus defining a sealed coupling.

More specifically, each retaining element 13 defines a relevant anchoring surface 14 adapted to interact with a corresponding abutment surface 11 as a result of the insertion of the shaped portions 12 into their respective cavities 10. Advantageously, the retaining elements 13 are of the elastically deformable type. The body 2 is therefore adapted to deform the retaining elements 13 during the insertion thereof within the housing seat 8 and the retaining elements 13 are adapted to come back to their relevant home positions as a result of the insertion of the shaped portions 12 into their respective cavities 10. As a result of the elastic return towards their relevant home positions, the retaining elements 13 then interact, through their anchoring surfaces 14, with the abutment surfaces 11 defined by the body 2.

Due to the elastic return of the retaining elements 13, the shaped portions 12 then snap into their respective cavities 10 as a result of the insertion of the body 2 inside the housing seat 8.

The term "home position" refers to the position naturally taken by the retaining elements 13 that is, when not subject to external forces.

More particularly, the supporting element 7 comprises a base element 7a, defining the housing seat 8 and having an upper edge 7b; the retaining elements 13 are associated with the base element 7a at the upper edge 7b and are elastically movable towards the outside by effect of the insertion of the body 2 into the housing seat 8.

The housing seat 8 in turn defines a resting surface 8a against which the body 2 rests as a result of its insertion inside the housing seat itself. The recess 9 is defined where the resting surface 8a is located.

Advantageously, the resting surface 8a is substantially flat and free of protrusions/grooves. Similarly, the surface of the body 2 adapted to abut against the resting surface 8a is also flat and free of grooves/protrusions.

More particularly, the upper edge 7b extends vertically starting from the resting surface 8a so as to peripherally surround the faces 26a, 26b, 26c when the body 2 is inserted inside the housing seat 8. Preferably, the upper edge 7b is formed by deep drawing.

In an alternative embodiment, not shown in the figures, the base element 7a defines a step, placed between the resting surface 8a and the upper edge 7b, substantially parallel to the resting surface itself. This step is adapted to operate in conjunction, in use, that is once the body 2 has been inserted in the housing seat 8, with a corresponding stopping surface defined by the body itself. **In** this way, should the paraffin poured inside the recess 9 escape from the same, it would be forced to follow a path conformed substantially to an "S" shape which is adapted to facilitate the cooling thereof.

Advantageously, each of the retaining elements 13 has two portions positioned mutually converging towards the inside of the supporting element 7, of which an upper portion 13a, adapted to be intercepted by the body 2 during the insertion thereof in the housing seat 8, and a lower portion 13b defining the anchoring surface 14.

The anchoring surfaces 14 are then arranged inclined with respect to the resting surface 8a. More specifically, both portions 13a and 13b are arranged inclined with respect to the resting surface 8a.

Preferably, at least the base element 7a is made of metallic material so as to allow high heat exchange and thus speed up the processes of solidification and detachment of the paraffin P.

Appropriately, the retaining elements 13 are also made of the same material as the base element 7a.

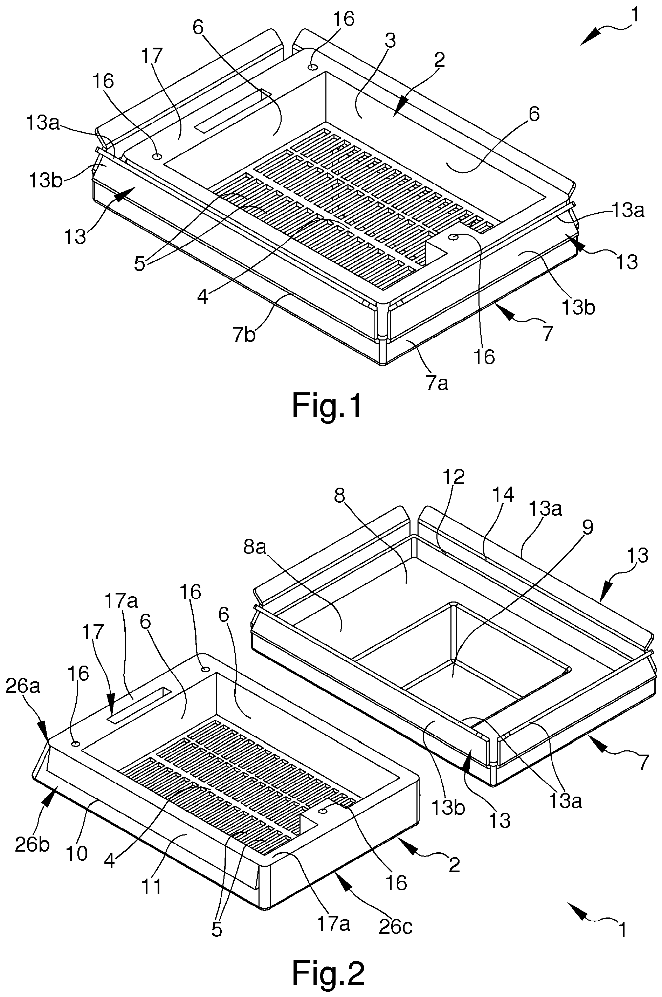

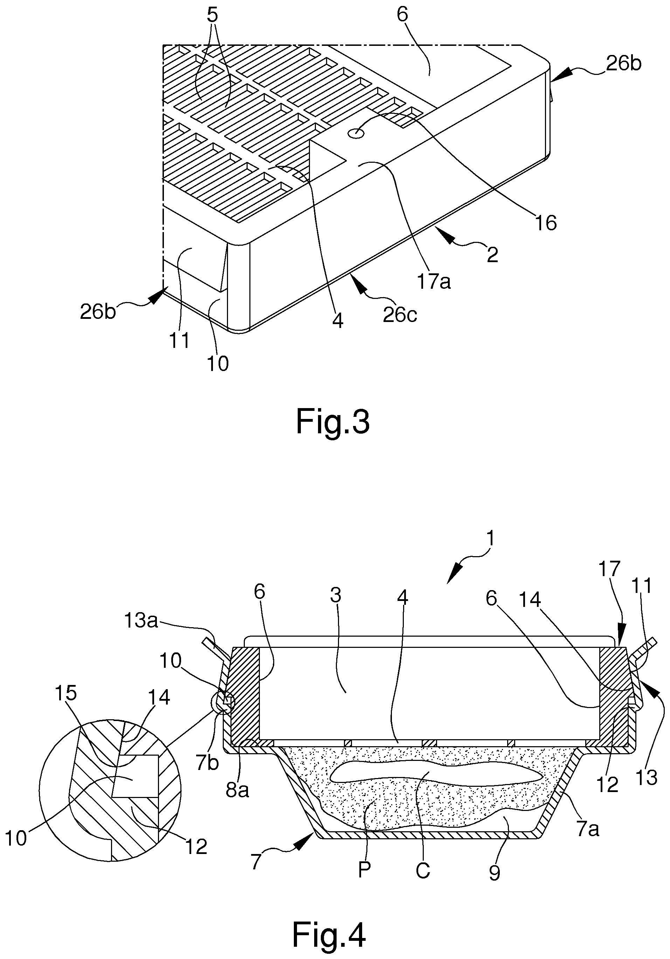

In the embodiment shown in Figures 1 to 4, the retaining elements 13 are separate from the shaped portions 12 and the abutment surfaces 11 are arranged inclined with respect to the bottom wall 4 of the body 2. In this embodiment, the anchoring surfaces 14 defined by the retaining elements 13 are adapted to rest on the relevant abutment surfaces 11, as a result of the insertion of the shaped portions 12 into the respective cavities 10, being substantially coplanar to the abutment surfaces themselves.

Appropriately, the abutment surfaces 11 run along the full extension of the outer lateral faces 26b.

More particularly, the abutment surfaces 11 are oriented diverging towards the outside proceeding towards the bottom wall 4. In other words, the abutment surfaces 11 defined on the opposite outer lateral faces 26b converge as they run towards the upper edge of the body 2.

Advantageously, in this embodiment, the abutment surfaces 11 have different inclination with respect to the front face 26a.

The lower end of each abutment surface 11 is connected to the relevant outer lateral face 26b by means of a corresponding fitting 15, thus defining the cavity 10.

In this embodiment, the shaped portions 12 are defined by the joining areas of the upper edge 7b of the base element 7a with the lower portions 13b of the retaining element 13. The shaped portions 12 thus defined are thus substantially complementary to the corresponding cavities 10.

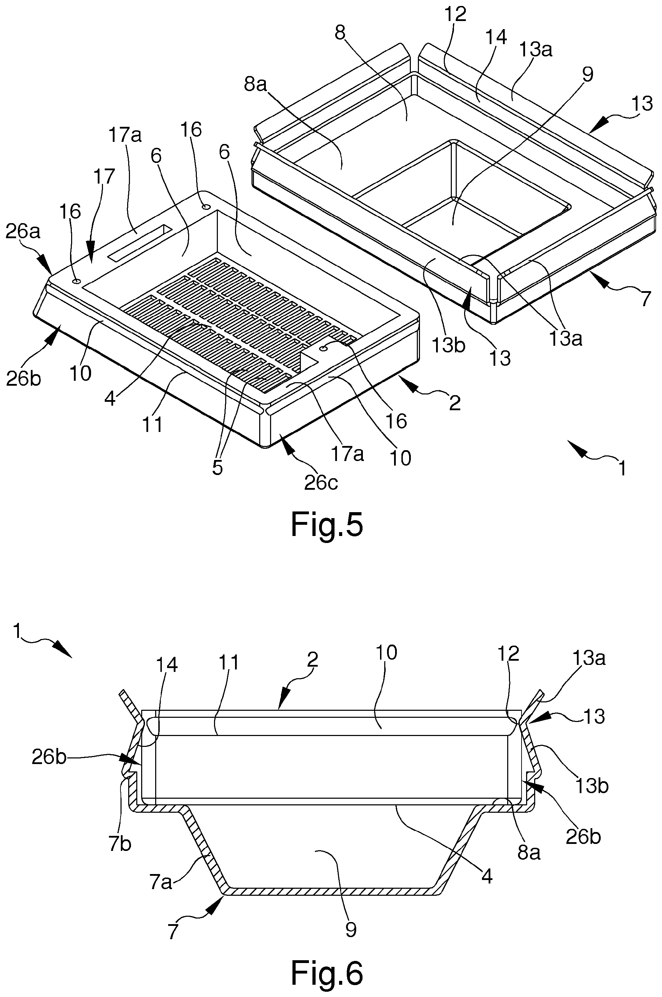

In the alternative embodiment shown in Figures 5 and 6, on the other hand, the retaining elements 13 define the shaped portions 12 and the cavities 10 define the abutment surfaces 11.

More particularly, in this embodiment, the cavities 10 are substantially C-shaped and the joining area of the upper portion 13a and of the lower portion 13b of each retaining element 13 defines the corresponding shaped portion 12.

The abutment surfaces 11 can be arranged substantially parallel to the bottom wall 4, in the case where the cavities 10 form right angles, or they can be of the curvilinear type, as in the embodiment shown in Figures 5 and 6.

Preferably, the cavity 10 is defined on both the outer lateral faces 26b and the rear face 26c and the supporting element 7 comprises a plurality of retaining elements 13, arranged at least where each of the faces 26b, 26c is located, each of which is adapted to be inserted with the relevant shaped portion 12 inside the cavity 10 defined on the corresponding face 26b, 26c.

Appropriately, depending on the embodiment, the retaining elements 13 can be arranged at each of the faces 26a, 26b, 26c, substantially along the entire perimeter edge defined by the upper edge 7b, or only at two or three faces 26, e.g. the outer lateral faces 26b and possibly also the rear face 26c, so as to leave at least one side of the upper edge 7b free to facilitate the extraction of the body 2 from the housing seat 8.

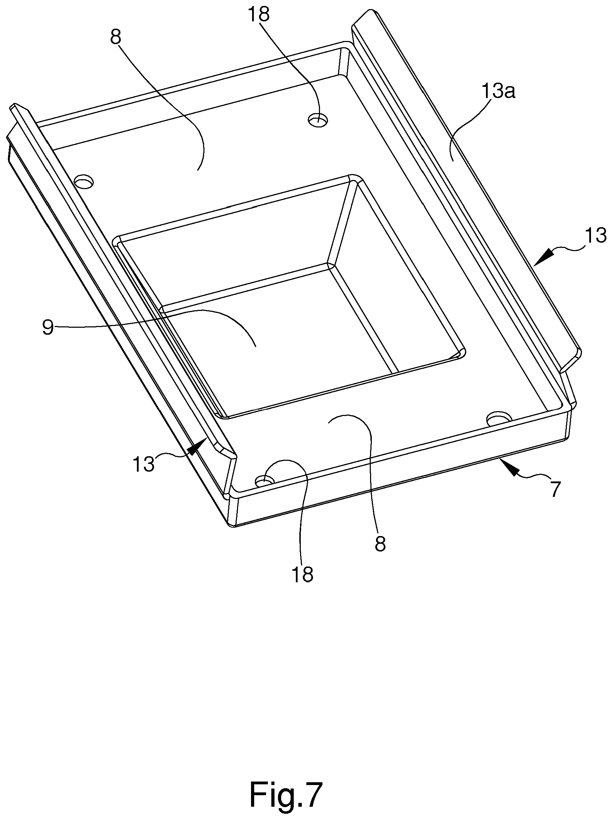

Preferably, as shown in the embodiment of Figure 7, the supporting element 7 comprises at least one through hole 18, defined on the resting surface 8a for the insertion from the outside of a tool adapted to push the body 2 out of the housing seat 8, counteracting the action exerted by the retaining elements 13.

Also according to the invention, the body 2 comprises at least one abutment element 16 engageable by an external tool, e.g., the microtome.

In more detail, the abutment element 16 is of the type of a groove.

The possibility cannot however be ruled out that the abutment element 16 be of the type of a protrusion or the like.

The containment walls 6 define an upper perimeter surface 17, that is substantially parallel to the bottom wall 4, and the abutment elements 16 are defined at the upper perimeter surface itself.

Preferably, the body 2 comprises a plurality of abutment elements 16, where at least two such abutment elements 16 are defined at two mutually opposite stretches 17a of the upper perimeter surface 17. The abutment elements 16 may all be of the same type, recessed or protruding, or of different types from each other.

In the embodiment shown in the Figures 1 to 6, the body 2 comprises three abutment elements 16, of which two are defined at one of the stretches 17a and one is defined on the other of the stretches 17a.

More particularly, in these embodiments, the two stretches 17a are defined one at the front face 26a and the other at the rear face 26c.

In other words, the abutment elements 16 are arranged at the vertices of an ideal triangle.

As anticipated above, the abutment elements 16 are intended to be intercepted by an external tool, such as the microtome or a tool for dispensing the paraffin P, so as to ensure the correct centering of the body 2 with respect to the tool itself during the processing phases.

The operation of this invention is as follows.

Once the biological sample C has been treated with formalin, it is placed within the recess 9 defined on the supporting element 7.

Subsequently, the body 2 is pushed inside the housing seat 8. More specifically, during the insertion in the housing seat 8, the body 2 interacts with the upper portion 13a of the retaining elements 13 which, diverging upwards (considering the retaining element 7 arranged with the housing seat 8 facing upwards), is pushed outwards to allow the body itself to move forward. Due to their elasticity, the retaining elements 13 deform, by flexing.

The body 2 is then pushed inside the housing seat 8 until its bottom wall 4 contacts the resting surface 8a. At the same time, the shaped portions 12 of the supporting element 7 inserted in the relevant cavities 10 and the anchoring surfaces 14 interact with the abutment surfaces 11 defined by the body 2, thus ensuring adhesion between the latter and the supporting element 7 and keeping it in place inside the housing seat 8 so as to prevent the accidental spillage thereof.

The body 2 then snaps inside the housing seat 8.

Specifically, in the embodiment shown in Figures 1 to 4, as a result of the insertion of the body 2 into the housing seat 8, the retaining elements 13 are first pushed outwards as a result of the interaction with the body itself and, once the shaped portions 12 inserted inside their respective cavities 10, elastically return towards their relevant home positions, arranging themselves resting on the abutment surfaces 11. Thus, as a result of the coupling between the abutment surfaces 11, which are inclined, and the relevant anchoring surfaces 14, which are arranged to rest thereon at substantially the same inclination, the body 2 is constrained to remain in position inside the housing seat 8.

In the embodiment of Figure 5, on the other hand, as a result of the gradual insertion of the body 2 inside the housing seat 8, the retaining elements 13 first deform by moving outwards and then elastically return towards the home position the instant when the shaped portions 12 defined by the retaining elements 13 themselves arrive at the corresponding cavities 10. As a result of the alignment with the cavity 10, the shaped portion 12 defined by the convergence area of the lower portion 13b with the upper portion 13a then inserts inside it, thus allowing both the elastic return of the relevant retaining element 13 and the blocking of the body 2 inside the housing seat 8 as a result of the interaction of the anchoring surface 14 with the abutment surface 11 defined by the same cavity.

Once the body 2 is arranged inside the housing seat 8, pouring of paraffin P can be carried out, which passes through the openings 5 defined on the bottom wall 4 and enters the recess 9, thus wrapping the biological sample C.

Specifically, pouring of the paraffin P can be carried out by means of a special tool which is arranged above the body 2 and in such a way as to engage the abutment elements 16 thereof so as to ensure correct mutual positioning during dispensing of the paraffin P.

As a result of solidification of the paraffin P, the body 2 can then be removed from the supporting element 7 for subsequent placement on the microtome.

As can be easily appreciated, in order to allow the body 2 to be pulled out, it is necessary to widen the retaining elements 13 by pushing these outwards, thus disengaging the anchoring surfaces 14 from the abutment surfaces 11 and allowing the shaped portions 12 to come out of their respective cavities 10.

The removal of the body 2 from the housing seat 8 can be facilitated, depending on the embodiments, by accessing the body itself through one of the free sides of the supporting element 7, i.e. which do not have a relevant retaining element 13, or by introducing a tool inside one of the holes 18.

It has in practice been ascertained that the described invention achieves the intended objects and, in particular, the fact is emphasized that the particular conformation of the body and of the supporting element allow the body itself to remain adherent to the relevant housing seat in such a way that, during the paraffin pouring phase, the latter remains as much as possible circumscribed to the recess containing the biological sample, thus minimizing or completely eliminating the amount that is arranged around the lateral walls. This technical effect allows making subsequent processing phases significantly easier, as it reduces or even cancels the time required to clean the body and, consequently, also the relevant costs.

In addition, the use of elastically deformable retaining elements allows the body to be easily snapped inside the housing seat and, at the same time, to be kept inside it, thus preventing the accidental release thereof, e.g., due to the thrust exerted by the paraffin on the body itself as a result of the filling of the recess defined on the supporting element. This greatly simplifies the paraffin pouring phase, as the presence of an operator is no longer required to hold the body in place inside the relevant housing seat, thus enabling the automation of this process.

In addition, the presence of the abutment elements makes it possible to ensure the correct centering and its repeatability over time of the body with respect to the tool used for paraffin pouring and/or with respect to the microtome, thus ensuring the correct mutual alignment and, consequently, the proper performance of the relevant processing phases.

## Claims

1. Device (1) for processing biological samples comprising:
- a body (2) defining at least one containment chamber (3) open at the top and having a bottom wall (4) provided with a plurality of openings (5) passing through it and a plurality of containment walls (6) extending from said bottom wall (4) so as to define a closed profile;
where said body (2) has a polygonal conformation and comprises at least one inclined front face (26a) and a pair of outer lateral faces (26b) contiguous and transverse to said front face (26a), where said outer lateral faces (26b) are opposite each other;
- at least one supporting element (7) defining at least one housing seat (8) of said body (2), wherein said housing seat (8) has at least one resting surface (8a) of said body (2) and at which at least one recess (9) is defined which is intended to receive a sample of biological tissue (C), said recess (9) being arranged, in use, facing said bottom wall (4);
**characterized by** the fact that said body (2) comprises at least one cavity (10) defined at least on each of said outer lateral faces (26b), where said cavity (10) faces outwards and defines at least one relevant abutment surface (11),
by the fact that said body (2) comprises at least one abutment element (16) engageable by an external tool so as to ensure the correct centering of the body (2) with respect to the tool itself during the processing phases, wherein said containment walls (6) define an upper perimeter surface (17) of said body (2) substantially parallel to said bottom wall (4) and wherein said abutment element (16) is defined at said upper perimeter surface (17) and is of the type of a groove or of a protrusion, and
by the fact that said supporting element (7) has at least one pair of shaped portions (12) adapted to be inserted in a relevant cavity (10) as a result of the introduction of said body (2) into said housing seat (8) and comprises at least one pair of retaining elements (13) defining relevant anchoring surfaces (14) adapted to interact with said abutment surface (11) as a result of the insertion of said shaped portions (12) into said cavities (10) so as to counteract the coming out of said body (2) from said housing seat (8),
wherein said cavity (10) runs parallel to said bottom wall (4) and develops substantially along the entire extension of the relevant outer lateral face (26b) on which it is defined and by the fact that said shaped portions (12) are adapted to be inserted inside the relevant cavities (10) substantially along the entire development thereof,
by the fact that said retaining elements (13) are separate from said shaped portions (12), by the fact that said abutment surfaces (11) are arranged inclined with respect to said bottom wall (4) and by the fact that said anchoring surfaces (14) are adapted to rest on the corresponding abutment surfaces (11), being substantially coplanar to these, as a result of the insertion of said shaped portion (12) inside said cavity (10),
wherein said abutment surfaces (11) are oriented diverging towards the outside proceeding towards said bottom wall (4).

2. Device (1) according to claim 1, **characterized by** the fact that said body (2) comprises a rear face (26c) which is contiguous and transverse to said outer lateral faces (26b) and is opposite said front face (26a), by the fact that said cavity (10) is also defined on said rear face (26c), substantially along the entire development thereof, and by the fact that said supporting element (7) comprises a plurality of said retaining elements (13), each of which is adapted to be inserted with the relevant shaped portion (12) inside the cavity (10) defined on the corresponding face (26b, 26c).

3. Device according to one or more of the preceding claims, **characterized by** the fact that said body (2) snaps into said housing seat (8) as a result of the insertion of said shaped portions (12) into said cavities (10).

4. Device (1) according to one or more of the preceding claims, **characterized by** the fact that said retaining elements (13) are elastically deformable and by the fact that said body (2) is adapted to move said retaining elements (13) with respect to their relevant home positions during the insertion into said housing seat (8), said retaining elements (13) coming back towards the respective home positions by effect of the insertion of said shaped portions (12) into said cavities (10) and interacting with said abutment surfaces (11).

5. Device (1) according to one or more of the preceding claims, **characterized by** the fact that said supporting element (7) comprises a base element (7a) defining said housing seat (8) and having an upper edge (7b) and by the fact that said retaining elements (13) are associated with said base element (7a) at said upper edge (7b) and are elastically movable outwards by effect of the insertion of said body (2) into said housing seat (8).

6. Device (1) according to one or more of the preceding claims, **characterized by** the fact that said abutment surfaces (11) have different inclinations with respect to said front face (26a).

7. Device (1) according to one or more of the preceding claims, **characterized by** the fact that each of said retaining elements (13) has two portions (13a, 13b) arranged mutually converging towards the inside of said supporting element (7), of which an upper portion (13a) adapted to be intercepted by said body (2) during the insertion thereof inside said housing seat (8), and a lower portion (13b) defining said anchoring surface (14) and by the fact that said shaped portions (12) are defined by the joining areas of the upper edge (7b) of said base element (7a) with said lower portions (13b).

8. Device (1) according to one or more of the preceding claims, **characterized by** the fact that said housing seat (8) defines a resting surface (8a) of said body (2) and by the fact that said anchoring surfaces (14) are arranged inclined with respect to said resting surface (8a).

9. Device (1) according to claim 8, **characterized by** the fact that said resting surface (8a) is substantially flat and free of protrusions.

10. Device (1) according to one or more of the preceding claims, **characterized by** the fact that said body (2) comprises a plurality of said abutment elements (16) and by the fact that at least two of said abutment elements (16) are defined at two mutually opposite stretches (17a) of said upper perimeter surface (17).

11. Device (1) according to claim 10, **characterized by** the fact that it comprises three of said abutment elements (16), of which two are defined at one of said stretches (17a) and one is defined on the other of said stretches (17a).

12. Device (1) according to claim 10 or 11, **characterized by** the fact that said two stretches (17a) are defined one at said front face (26a) and the other at said rear face (26c).

## Patentansprüche

1. Vorrichtung (1) zur Verarbeitung biologischer Proben, umfassend:
- einen Körper (2), der mindestens eine Aufnahmekammer (3) definiert, die oben offen ist und eine Bodenwand (4) aufweist, die mit einer Mehrzahl von Öffnungen (5) versehen ist, die durch sie hindurchgehen, und eine Mehrzahl von Begrenzungswänden (6), die sich von der Bodenwand (4) aus erstrecken, so dass sie ein geschlossenes Profil definieren;
wobei der Körper (2) eine polygonale Form aufweist und mindestens eine geneigte vordere Fläche (26a) und ein Paar äußerer Seitenflächen (26b) umfasst, die an die vordere Fläche (26a) angrenzen und quer zu dieser verlaufen, wobei die äußeren Seitenflächen (26b) einander gegenüberliegen;
- mindestens ein Stützelement (7), das mindestens einen Aufnahmesitz (8) des Körpers (2) definiert, wobei der Aufnahmesitz (8) mindestens eine Rastfläche (8a) des Körpers (2) aufweist und an dem mindestens eine Ausnehmung (9) definiert ist, die dazu bestimmt ist, eine Probe von biologischem Gewebe (C) aufzunehmen, wobei die Ausnehmung (9) im Gebrauch der Bodenwand (4) zugewandt angeordnet ist;
**dadurch gekennzeichnet, dass** der Körper (2) mindestens eine Aushöhlung (10) umfasst, die mindestens auf jeder der äußeren Seitenflächen (26b) definiert ist, wobei die Aushöhlung (10) nach außen weist und mindestens eine relevante Anlagefläche (11) definiert,
dass der Körper (2) mindestens ein Anlageelement (16) umfasst, das mit einem externen Werkzeug in Eingriff gebracht werden kann, um die korrekte Zentrierung des Körpers (2) in Bezug auf das Werkzeug selbst während der Verarbeitungsphasen sicherzustellen, wobei die Begrenzungswände (6) eine obere Umfangsfläche (17) des Körpers (2) definieren, die im Wesentlichen parallel zu der Bodenwand (4) verläuft, und wobei das Anlageelement (16) an der oberen Umfangsfläche (17) definiert ist und von der Art einer Nut oder eines Vorsprungs ist,
und dass das Stützelement (7) mindestens ein Paar von geformten Abschnitten (12) aufweist, die dazu ausgebildet sind, in einer entsprechenden Aushöhlung (10) infolge des Einführens des Körpers (2) in den Aufnahmesitz (8) eingeführt zu werden, und mindestens ein Paar von Rückhalteelementen (13) umfasst, die relevante Verankerungsflächen (14) definieren, die dazu ausgebildet sind, mit der Anlagefläche (11) infolge des Einführens der geformten Abschnitte (12) in die Hohlräume (10) zusammenzuwirken, um dem Heraustreten des Körpers (2) aus dem Aufnahmesitz (8) entgegenzuwirken,
wobei die Aushöhlung (10) parallel zu der Bodenwand (4) verläuft und sich im Wesentlichen entlang der gesamten Erstreckung der relevanten äußeren Seitenfläche (26b), auf der sie definiert ist, entwickelt, und dadurch, dass die geformten Abschnitte (12) dazu ausgebildet sind, in die betreffenden Aushöhlungen (10) im Wesentlichen entlang ihrer gesamten Entwicklung eingeführt zu werden,
dass die Rückhalteelemente (13) von den geformten Abschnitten (12) getrennt sind, dass die Anlageflächen (11) in Bezug auf die Bodenwand (4) geneigt angeordnet sind, und dass die Verankerungsflächen (14) dazu ausgebildet sind, auf den entsprechenden Anlageflächen (11) aufzuliegen, wobei sie im Wesentlichen koplanar zu diesen sind, als Ergebnis des Einsetzens des geformten Abschnitts (12) in die Aushöhlung (10),
wobei die Anlageflächen (11) zur Außenseite hin in Richtung der Bodenwand (4) divergierend ausgerichtet sind.

2. Vorrichtung (1) nach Anspruch 1, **dadurch gekennzeichnet, dass** der Körper (2) eine hintere Fläche (26c) umfasst, die an die äußeren Seitenflächen (26b) angrenzt und quer zu diesen verläuft und der vorderen Fläche (26a) gegenüberliegt, dass die Aushöhlung (10) auch auf der hinteren Fläche (26c), im Wesentlichen entlang ihrer gesamten Erstreckung, definiert ist, und dass das Stützelement (7) eine Mehrzahl der Rückhalteelemente (13) umfasst, von denen jedes dazu ausgebildet ist, mit dem relevanten geformten Abschnitt (12) in die Aushöhlung (10) eingeführt zu werden, der auf der entsprechenden Fläche (26b, 26c) definiert ist.

3. Vorrichtung nach einem oder mehreren der vorhergehenden Ansprüche, **dadurch gekennzeichnet, dass** der Körper (2) als Ergebnis des Einsetzens der geformten Abschnitte (12) in die Aushöhlungen (10) in den Aufnahmesitz (8) einschnappt.

4. Vorrichtung (1) nach einem oder mehreren der vorangehenden Ansprüche, **dadurch gekennzeichnet, dass** die Rückhalteelemente (13) elastisch verformbar sind und dass der Körper (2) geeignet ist, die Rückhalteelemente (13) während des Einsetzens in den Aufnahmesitz (8) in Bezug auf ihre jeweiligen Grundpositionen zu bewegen, wobei die Rückhalteelemente (13) durch die Wirkung des Einsetzens der geformten Abschnitte (12) in die Aushöhlungen (10) und das Zusammenwirken mit den Anlageflächen (11) in die jeweiligen Grundpositionen zurückkehren.

5. Vorrichtung (1) nach einem oder mehreren der vorhergehenden Ansprüche, **dadurch gekennzeichnet, dass** das Stützelement (7) ein Basiselement (7a) umfasst, das den Aufnahmesitz (8) definiert und eine obere Kante (7b) aufweist, und dass die Rückhalteelemente (13) dem Basiselement (7a) an der oberen Kante (7b) zugeordnet sind und durch das Einsetzen des Körpers (2) in den Aufnahmesitz (8) elastisch nach außen bewegbar sind.

6. Vorrichtung (1) nach einem oder mehreren der vorhergehenden Ansprüche, **dadurch gekennzeichnet, dass** die Anlageflächen (11) unterschiedliche Neigungen in Bezug auf die vordere Fläche (26a) aufweisen.

7. Vorrichtung (1) nach einem oder mehreren der vorhergehenden Ansprüche, **dadurch gekennzeichnet, dass** jedes der Rückhalteelemente (13) zwei Abschnitte (13a, 13b) aufweist, die gemeinsam zur Innenseite des Stützelements (7) hin konvergieren, von denen ein oberer Abschnitt (13a) geeignet ist, von dem Körper (2) während des Einsetzens desselben in den Aufnahmesitz (8) abgefangen zu werden, und ein unterer Abschnitt (13b) die Verankerungsfläche (14) definiert, und dass die geformten Abschnitte (12) durch die Verbindungsbereiche der oberen Kante (7b) des Basiselements (7a) mit den unteren Abschnitten (13b) definiert sind.

8. Vorrichtung (1) nach einem oder mehreren der vorhergehenden Ansprüche, **dadurch gekennzeichnet, dass** der Aufnahmesitz (8) eine Rastfläche (8a) des Körpers (2) definiert und dass die Verankerungsflächen (14) in Bezug auf die Rastfläche (8a) geneigt angeordnet sind.

9. Vorrichtung (1) nach Anspruch 8, **dadurch gekennzeichnet, dass** die Rastfläche (8a) im Wesentlichen flach und frei von Vorsprüngen ist.

10. Vorrichtung (1) nach einem oder mehreren der vorhergehenden Ansprüche, **dadurch gekennzeichnet, dass** der Körper (2) eine Mehrzahl der Anlageelemente (16) umfasst und dass mindestens zwei der Anlageelemente (16) an zwei einander gegenüberliegenden Bereichen (17a) der oberen Umfangsfläche (17) definiert sind.

11. Vorrichtung (1) nach Anspruch 10, **dadurch gekennzeichnet, dass** sie drei der Anlageelemente (16) umfasst, von denen zwei an einem der Bereiche (17a) und eines an dem anderen der Bereiche (17a) definiert sind.

12. Vorrichtung (1) nach Anspruch 10 oder 11, **dadurch gekennzeichnet, dass** die zwei Bereiche (17a) an der vorderen Fläche (26a) und der andere an der hinteren Fläche (26c) definiert sind.

## Revendications

1. - Dispositif (1) pour le traitement d'échantillons biologiques comprenant :
- un corps (2) définissant au moins une chambre de confinement (3) ouverte à la partie supérieure et ayant une paroi de fond (4) comportant une pluralité d'ouvertures (5) la traversant et une pluralité de parois de confinement (6) s'étendant à partir de ladite paroi de fond (4) de manière à définir un profil fermé ;
ledit corps (2) ayant une conformation polygonale et comprenant au moins une face avant inclinée (26a) et une paire de faces latérales externes (26b) contiguës et transversales à ladite face avant (26a), lesdites faces latérales externes (26b) étant opposées l'une à l'autre ;
- au moins un élément de support (7) définissant au moins un siège de logement (8) dudit corps (2), ledit siège de logement (8) ayant au moins une surface d'appui (8a) dudit corps (2) et dans laquelle est défini au moins un évidement (9) qui est destiné à recevoir un échantillon de tissu biologique (C), ledit évidement (9) étant agencé, lors de l'utilisation, en regard de ladite paroi de fond (4) ;
**caractérisé par le fait que** ledit corps (2) comprend au moins une cavité (10) définie au moins sur chacune desdites faces latérales externes (26b), ladite cavité (10) étant tournée vers l'extérieur et définissant au moins une surface de butée appropriée (11),
**par le fait que** ledit corps (2) comprend au moins un élément de butée (16) pouvant être engagé par un outil externe de façon à assurer le centrage correct du corps (2) par rapport à l'outil lui-même pendant les phases de traitement, lesdites parois de confinement (6) définissant une surface périphérique supérieure (17) dudit corps (2) sensiblement parallèlement à ladite paroi de fond (4) et ledit élément de butée (16) étant défini à ladite surface périphérique supérieure (17) et étant du type d'une rainure ou d'une saillie, et
**par le fait que** ledit élément de support (7) a au moins une paire de parties façonnées (12) adptes à être introduites dans une cavité appropriée (10) par suite de l'introduction dudit corps (2) dans ledit siège de logement (8) et comprend au moins une paire d'éléments de retenue (13) définissant des surfaces d'ancrage appropriées (14) aptes à interagir avec ladite surface de butée (11) par suite de l'introduction desdites parties façonnées (12) dans lesdites cavités (10) de façon à s'opposer à la sortie dudit corps (2) dudit siège de boîtier (8),
ladite cavité (10) s'étendant parallèlement à ladite paroi de fond (4) et se développant sensiblement le long de toute l'étendue de la face latérale extérieure appropriée (26b) sur laquelle elle est définie, et lesdites parties façonnées (12) étant aptes à être introduites à l'intérieur des cavités appropriées (10) sensiblement le long de tout leur développement,
**par le fait que** lesdits éléments de retenue (13) sont séparés desdites parties façonnées (12), **par le fait que** lesdites surfaces de butée (11) sont disposées en étant inclinées par rapport à ladite paroi de fond (4) et **par le fait que** lesdites surfaces d'ancrage (14) sont aptes à reposer sur les surfaces de butée appropriées (11), en étant sensiblement coplanaires à celles-ci, par suite de l'introduction de ladite partie façonnée (12) à l'intérieur de ladite cavité (10),
lesdites surfaces de butée (11) étant orientées de manière divergente vers l'extérieur en se dirigeant vers ladite paroi de fond (4).

2. - Dispositif (1) selon la revendication **1, caractérisé par le fait que** ledit corps (2) comprend une face arrière (26c) qui est contiguë et transversale auxdites faces latérales externes (26b) et est opposée à ladite face avant (26a), **par le fait que** ladite cavité (10) est également définie sur ladite face arrière (26c), sensiblement le long de tout son développement, et **par le fait que** ledit élément de support (7) comprend une pluralité desdits éléments de retenue (13), chacun d'entre eux étant apte à être introduit avec la partie façonnée appropriée (12) à l'intérieur de la cavité (10) définie sur la face correspondante (26b, 26c).

3. - Dispositif selon l'une ou plusieurs des revendications précédentes, **caractérisé par le fait que** ledit corps (2) s'enclenche dans ledit siège de logement (8) par suite de l'introduction desdites parties façonnées (12) dans lesdites cavités (10).

4. - Dispositif (1) selon une ou plusieurs des revendications précédentes, **caractérisé par le fait que** lesdits éléments de retenue (13) sont élastiquement déformables et **par le fait que** ledit corps (2) est apte à déplacer lesdits éléments de retenue (13) par rapport à leurs positions initiales appropriées pendant l'introduction dans ledit siège de logement (8), lesdits éléments de retenue (13) revenant vers leurs positions initiales respectives sous l'effet de l'introduction desdites parties façonnées (12) dans lesdites cavités (10) et en interaction avec lesdites surfaces de butée (11).

5. - Dispositif (1) selon une ou plusieurs des revendications précédentes, **caractérisé par le fait que** ledit élément de support (7) comprend un élément de base (7a) définissant ledit siège de logement (8) et ayant un bord supérieur (7b) et **par le fait que** lesdits éléments de retenue (13) sont associés audit élément de base (7a) audit bord supérieur (7b) et sont élastiquement mobiles vers l'extérieur sous l'effet de l'introduction dudit corps (2) dans ledit siège de logement (8).

6. - Dispositif (1) selon une ou plusieurs des revendications précédentes, **caractérisé par le fait que** des surfaces de butée (11) ont des inclinaisons différentes par rapport à ladite face avant (26a).

7. - Dispositif (1) selon une ou plusieurs des revendications précédentes, **caractérisé par le fait que** chacun desdits éléments de retenue (13) a deux parties (13a, 13b) disposées de manière à converger mutuellement vers l'intérieur dudit élément de support (7), dont une partie supérieure (13a), apte à être interceptée par ledit corps (2) lors de son introduction à l'intérieur dudit siège de logement (8), et une partie inférieure (13b) définissant ladite surface d'ancrage (14), et **par le fait que** lesdites parties façonnées (12) sont définies par les zones de jonction du bord supérieur (7b) dudit élément de base (7a) avec lesdites parties inférieures (13b).

8. - Dispositif (1) selon une ou plusieurs des revendications précédentes, **caractérisé par le fait que** ledit siège de logement (8) définit une surface d'appui (8a) dudit corps (2) et **par le fait que** lesdites surfaces d'ancrage (14) sont disposées en étant inclinées par rapport à ladite surface d'appui (8a).

9. - Dispositif (1) selon la revendication 8, **caractérisé par le fait que** ladite surface d'appui (8a) est sensiblement plate et exempte de saillies.

10. - Dispositif (1) selon une ou plusieurs des revendications précédentes, **caractérisé par le fait que** ledit corps (2) comprend une pluralité desdits éléments de butée (16) et **par le fait qu'**au moins deux desdits éléments de butée (16) sont définis aux deux tronçons mutuellement opposés (17a) de ladite surface périphérique supérieure (17).

11. - Dispositif (1) selon la revendication 10, **caractérisé par le fait qu'**il comprend trois desdits éléments de butée (16), dont deux sont définis à l'un desdits tronçons (17a) et un est défini sur l'autre desdits
tronçons (17a).

12. - Dispositif (1) selon l'une des revendications 10 ou 11, **caractérisé par le fait que** lesdits deux tronçons (17a) sont définis l'un à ladite face avant (26a) et l'autre à ladite face arrière (26c).
